# EUROPEAN PATENT SPECIFICATION

(11) **EP 2 637 861 B1**
(45) Date of publication and mention of the grant of the patent: **01.07.2020**
(21) Application number: 11785572.6
(22) Date of filing: 08.11.2011
(51) Int. Cl.: B32B 7/06, C08J 7/04, B65D 77/20, B32B 27/36, B32B 27/32, B32B 7/12, C09J 7/20, B31B 50/62

(54) **A LAMINATE FOR USE IN PACKAGES, A METHOD OF MAKING A RECLOSABLE LAMINATE AND USE THEREOF**
LAMINAT ZUR VERWENDUNG FÜR VERPACKUNGEN, VERFAHREN ZUR HERSTELLUNG EINES WIEDERVERSCHLIESSBAREN LAMINATS UND DESSEN VERWENDUNG
COMPLEXE À UTILISER DANS LES EMBALLAGES, MÉTHODE DE FABRICATION D'UN COMPLEXE REFERMABLE ET UTILISATION DE CELUI-CI

(30) Priority: 11.11.2010 WO PCT/DK2010/000146
(43) Date of publication of application: 18.09.2013
(73) Proprietor: Danapak Flexibles A/S, 4200 Slagelse (DK)
(72) Inventor: SCHMIDT, Palle, 4200 Slagelse (DK); JOHANSEN, Peter, DK-4200 Slagelse (DK); DYDENSBORG, Else, DK-4200 Slagelse (DK); BRØDSGAARD, Ole, DK-4200 Slagelse (DK); WÆDELED, Benjamin, DK-4200 Slagelse (DK); CHRISTENSEN, Lars, DK-4200 Slagelse (DK)
(74) Representative: AWA Denmark A/S
(86) International application number: PCT/DK2011/000130
(87) International publication number: WO 2012/062317

(56) References cited:
- EP-A1- 1 582 341
- EP-A1- 2 108 507
- EP-A1- 2 119 735
- WO-A1-02/45949
- WO-A1-02/055300
- GB-A- 2 362 587
- US-A- 4 673 601
- US-A1- 2004 077 759

## Description

The invention relates to a method of making a reclosable laminate, such as a lid film for packages, as well as use of the laminate.

### The prior art

WO 02/055300 A1 describes a laminate in which a pressure sensitive adhesive (PSA) is sandwiched between a substrate layer and a sealant layer of polypropylene (PP). In a prior art laminate disclosed therein, polyethylene (PE) is used instead of PP in the sealant layer. This known laminate tends to delaminate between the PSA layer and the PE sealant layer, which causes formation of cracks, or so-called "piping", on the film when the sealant layer is separated from the PSA layer.

A known method described in EP 2108507 A1 comprises advancing a base sheet to an intaglio printing roller and applying the adhesive layer, the reclosure layer, during this process. This adhesive layer is normally a water-based adhesive, and, consequently, the water must be dried before the next process in the form of the application of a layer can be carried out.

This last application comprises depositing a welding layer on top of the adhesive layer, partly in order to allow storage of the laminate for later use, partly in order to protect the adhesive layer.

Thus, this process is both time-consuming and cumbersome, partly because of the drying need, partly because of the exposed adhesive layer, before a protective layer is applied to this in the final phase.

Another known method of making a reclosable laminate is in the manufacture in a so-called blowing extrusion, where a film and also an adhesive layer of a pressure sensitive adhesive (PSA) are extruded in an extruder.

This method requires that the materials used are extrudable up to about 250 °C, and also that this takes place in a multilayer extruder.

The drawback of this method is that it is relatively slow, since an additional working process is required in the manufacture, as, for one thing, a film with a reclosure layer has to be extruded, and, for another, the reclosure film must subsequently be laminated to a base film. To this should be added that the materials with which this laminate must be capable of being connected, i.e. the package part itself, are limited to such materials as can be welded together with the laminate.

WO 02/45949 A1 concerns a sealing material designed to be heat-sealed on one edge of a container comprising: a substrate, an adhesive pressure-sensitive layer, and a heat-sealing layer. The purpose of the sealing material is to provide an easy-to-open and reclosable heat-sealing material.

US 4 673 601 A discloses a cold- or heat-sealable composite film comprising a permanently adhesive layer which is applied to a carrier film. If the covering layer is not itself cold- or heat-sealable, it is provided with an appropriate cold- or hot-sealing layer. The composite film can be used as a closing membrane for preformed containers or can itself be formed as a container.

US 2004/077759 relates to hot-coextrudable hot-melt pressure-sensitive adhesives particularly suitable for the production of multilayer films intended for what are called "repositionable" packages that are opened and reclosed easily. The films used in these packages comprise at least three layers. In this type of package, the adhesive plays an essential role insofar as, once the package has been opened by the end user, the quality of the reclosure and of the reopening will depend on the performance of the adhesive, which is a pressure-sensitive adhesive, which adheres simply by manual pressure.

### The object of the invention

It is the object of the invention to simplify and thereby reduce the costs of a method of making such a reclosable laminate, and this is achieved according to claim 1.

In this manner, it is possible to save drying time when using hot melt as an adhesive, since the adhesive is cooled more quickly and sufficiently for a cover layer to be applied, whereby the manufacture may take place in one run, and, thus, the laminate is manufactured more quickly and readily than by the previously known method. To this should be added that there will be fewer limitations in the selection of materials of which the package part itself, the lower web, may be made in order to allow welding to the laminate,

The adhesive layer is applied directly to the base layer by the supply of the heated and thereby liquid adhesive, either via direct application or via a spray process, application may take place directly on the advancing base sheet.

When a roller, which is slip-free on the surface, is used for the application of the adhesive layer, a very precise metering with a completely uniform distribution and dimension of the adhesive may be achieved.

An applicator nozzle may be used to apply the hot melt. An applicator nozzle may apply the hot melt /PSA adhesive by direct contact.

The welding layer preferably comprises two sub-layers, which are coextruded on to the adhesive layer, and when this application is carried out in an all-in-one process on the advancing base layer, the production costs will be low compared to known methods.

In an expedient embodiment, the adhesive layer is applied in a thickness of 6-35 µm and preferably a thickness of 15-23 µm corresponding to approximately 12-18 g/m². The welding layer is applied in a thickness of 8-20 µm or corresponding to approximately 10-20 g/m².

The (PE) copolymer in the welding layer can be a copolymer of LDPE.

When the welding layer further comprises an additional outer layer of PET, PE, such as low density polyethylene (LDPE) and/or PP, proper welding of the laminate to sheets or containers made of or covered with layers of PET, PE or PP is ensured.

Finally, it is expedient to use the laminate as a lid sheet, precisely because it contains a welding layer for welding on a package, and with the property that this layer may be torn easily, so that the adhesive layer is exposed at the tearing operation. This ensures that the laminate, i.e. lid film, may be joined again with the lower part of the package, e.g. a sheet, a container or a tray, to form the assembled package when the separated parts are joined again at the closing of the package.

### The drawing

Examples of the method as well as the use of the laminate will be described more fully below with reference to the drawing, in which
- fig. 1: shows the principle of application of a reclosure layer via a an applicator unit, in a sectional view,
- fig. 2: shows the principle of indirect application of a reclosure layer via a roller, in a sectional view,
- fig. 3: shows the use of the laminate according to the invention as a lid film, in a sectional view, and
- fig. 4: shows a perspective view of a package with a lid film welded thereon.

### Description of exemplary embodiments

When packing food products or the like, it is common practice to use a lid film which is sealed by heat to a second sheet or sealed by heat to a rim area of a container, e.g. a tray-shaped container.

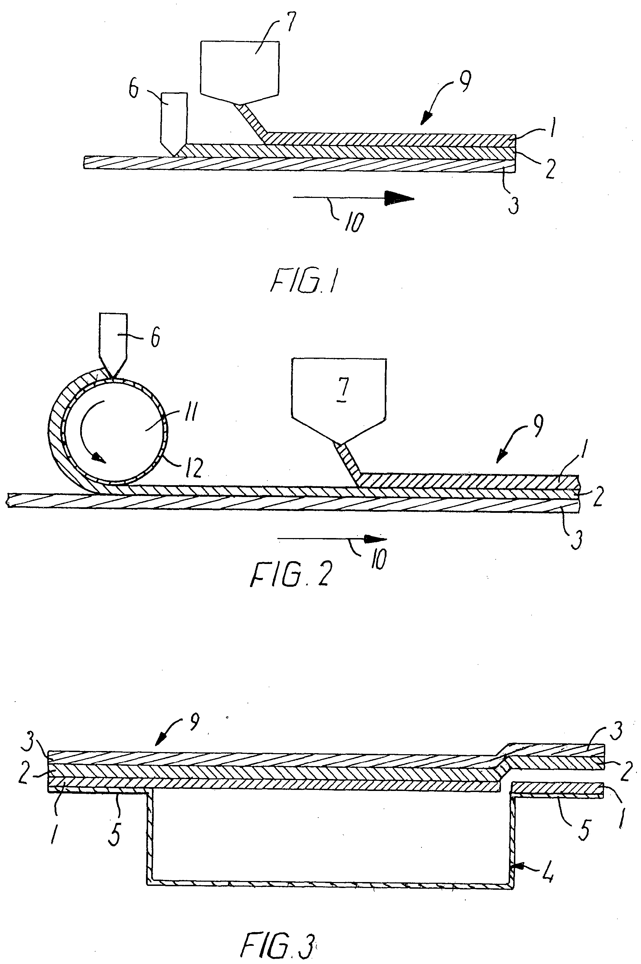

As shown in fig. 3, the lid film according to the invention is a reclosable laminate film 9, which comprises a base layer 3, a welding layer 1 and an adhesive layer 2 between the base layer 3 and the welding layer 1 ,

The composition of the base layer 3 depends entirely on the requirements which the finished product, the reclosable laminate 9, is to meet in order to protect the packaged product, such as a food product.

Thus, the base layer 3 may be a film of a homo- or copolymer of oriented polypropylene (OPP), oriented polyamide (OPA), polyethylene (PE), polyethylene terephthalate (PET) or combinations thereof, In addition, the base layer 3 may be a laminate of two or more layers of the described materials. The base layer 3 may thus comprise one or more additional layers serving as a light barrier, such as paper and/or aluminium (Al) layers; aroma barriers, such as a PET layer with a silicium oxide (SiOx) or aluminium oxide (AlOx) coating or an aluminium (Al) layer; water vapour barriers, such as e.g. OPP, or any combination thereof. These additional layers may be applied to the free surface of the base layer 3. The skilled person will be able to choose suitable materials of the additional layers applied for achieving a tight packaging material in respect of light, aroma and/or water vapour. Hereby, all requirements with respect to barrier, transparency, pressure, print, etc. may be met, i.e. the base layer 3 may also serve as a barrier layer.

The hot melt / PSA in the adhesive layer 2 is applied in a thickness of 6-35 µm, which corresponds to approximately 5-30 g/m², and preferably in a thickness of approximately 15-23 µm corresponding to 12-18 g/m².

In order to ensure proper adhesion to the other layers in the reclosable laminate 9, and especially to the PE-containing surface of the welding layer 1, it has been found to be especially preferred that the hot melt or PSA used has a shear rate of approximately 10-150 minutes at 40 °C according to the international standardi method for shear adhesion in pressure sensitive tape (PSTC 107) using a load of 1000 g at 40 °C in a test area of 12.5 mm x 25 mm. The preferred shear rate is between 30-70 minutes at 40 °C. When using a hot melt/PSA adhesive layer 2 having a shear rate as just described, the formation of cracks or "piping" in the laminate as described above is surprisingly found to be significantly reduced or even eliminated, also in a reclosable laminate 9 in which the hot melt or PSA is in direct contact with a PE containing surface of the welding layer.

The welding layer 1 comprises a sub-layer of PE co-polymer, which may be coextruded with an additional layer of PET, PE, such as low density polyethylene (LDPE) and/or PP. The PE co-polymer sub-layer in the welding layer serves as an adhesion surface towards the adhesive layer 2 and may serve as a welding layer 1 if no additional sub-layer is present. If an additional sub-layer is present it serves as welding surface towards the sheet or the package on which the reclosable laminate 9 is applied, e.g. as a lid. The welding layer 1 has a thickness of 8-20 µm or corresponding to approximately 10-20 g/m² depending on the density of the polymer layer(s) used.

If a PET sub-layer is present in the welding layer 1, the reclosable laminate 9 may be applied to packaging materials, e.g. sheets or containers, trays or the like made of PET or having a surface layer of PET; if a PP sub-layer is present in the welding layer 1, the reclosable laminate 9 may be applied to packaging materials, e.g. sheets or containers, trays or the like made of PP or having a surface layer of PP; and if a LDPE sub-layer is present in the welding layer 1, the reclosable laminate 9 may be applied to any packaging material made of PE or to which a surface layer containing PE, e.g. a LDPE, is applied.

In a preferred embodiment of the reclosable laminate 9, the welding layer 1 consists of one of the following combinations:
- PE copolymer/PET; the total thickness of the welding layer being approximately 10 µm or corresponding to 12 g/m², the PET sub-layer having a thickness of 3-4 µm or 4-6 g/m²,
- PE copolymer/PP; the total thickness of the welding layer being approximately 10 µm or corresponding to 12 g/m², the PP sub-layer having a thickness of 3-4 µm or 4-6 g/m²,
- PE copolymer/LDPE; the total thickness of the welding layer being approximately 10 µm or corresponding to 12 g/m², the LDPE sub-layer having a thickness of 3-4 µm or 4-6 g/m² or
- LDPE copolymer present as one unitary layer for contact to the PSA or hot melt and as a welding layer; the total thickness of the welding layer being approximately 10 µm or corresponding to 12 g/m².

The composition of the PE-copolymer is less important for obtaining a laminate in which formation of cracks or piping is reduced or eliminated. Thus, a PE homopolymer, such as, but not restricted to LDPE is also useful in obtaining the desired reduction or elimination of piping in the laminate. It appears that the most important parameter for reducing the piping in the laminate is the shear rate for the hot-melt or PSA as described above, especially in a re-closable laminate having a welding layer with a thin layer of PE containing polymer applied on the hot melt or PSA layer.

As examples of application amounts, thicknesses, it may be mentioned that if the base layer 3 in use is an OPP solution, it may have a layer thickness of 20 µm corresponding to 18-20 g/m². In case the base layer 3 is made of PE, the thickness will be in the range of 10-15 µm corresponding to approximately 10 g/m². In case of a base layer 3 of PET, the thickness of the base layer 3 may be 8-12 µm corresponding to 11.2-20 g/m², and preferably 10-12 µm corresponding to 14-20 g/m².

The welding layer 1 is preferably a layer of PE copolymer/PET as desribed above in combination with either of the above-mentioned base layers 3.

Methods according to the invention of making a reclosable laminate 9 which may be used as a reclosable lid on the package, will be described with reference to fig. 1 and fig. 2, respectively.

As a starting point for the manufacture, the methods use a base layer 3 which is advancing continuously, as indicated by the arrow 10, in the performance of the method.

An adhesive layer 2 is then applied, as shown in fig. 1, by means of an applicator unit 6, the adhesive layer 2 being applied on the advancing base layer 3 and in liquid form of a hot melt or a pressure sensitive adhesive (PSA) .

The applicator unit 6 may comprise a generally known applicator nozzle, which applies the hot melt /PSA adhesive either by direct contact, or in that the adhesive is sprayed onto the base layer 3.

Since the hot melt adhesive layer 2 will cool quickly on the base layer 3, a welding layer 1 may be coextruded immediately thereafter via a coextruder 7, the PE homo- or copolymer sub-layer of the welding layer 1 being applied directly to the surface of the adhesive layer 2. Hereby, the welding layer 1 also serves as a protection layer for the adhesive layer 2.

Fig. 2 shows another method by which the hot melt/PSA is applied to the base layer 3 from a nozzle 6 of an applicator roller 11. The surface of the roller is made adhesion-free by the application of a silicone layer 12. Hereby, it is possible to ensure a completely even and precisely distributed adhesive layer 2.

The method ensures that a reclosable laminate 9 according to the invention may be made in a single procedure, and the use of hot melt, which melts and cools quickly, allows it to recover its adhesion power, which is necessary to ensure that the adhesive and thereby the reclosure effect are optimum.

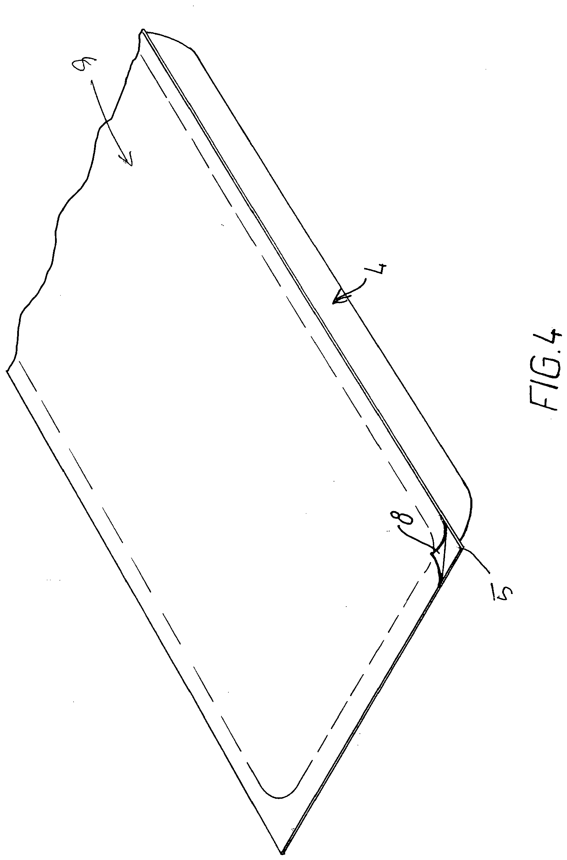

The use of the reclosable laminate 9 made by the method will now be described with reference to fig. 3 and fig. 4.

In the example shown, the reclosable laminate 9 is welded to a lower web 5, which may be the rim area on a container 4, e.g. a tray, as shown in fig. 4. This reclosable laminate layer 9 covers the package as a lid. A corner section 8 is indicated in fig. 4 to show that the film may be gripped and lifted when being pulled off.

As indicated to the right in fig. 3, when the package is opened, the reclosable laminate 9, in which the base layer 3 also serves as a barrier layer, will be separated: The welding layer 1 will remain on the base layer 3 and the adhesive layer 2, except in the area where the reclosable laminate 9 has been welded to the lower web 5. In this area, the welding layer 1 will remain on the lower web 5.

The adhesive layer 2, i.e. the hot melt/PSA, which enables reclosure of the package, will remain on the base layer 3, as shown, or alternatively - not shown - it may also remain on top of the welding layer 1 remaining on the lower web 5, e.g. the sheet, or the rim of the container or the tray, after opening of the package.

The adhesive layer 2 is exposed hereby, and the reclosable lid may be closed again by joining this part of the adhesive layer 2 with the rest of the laminate.

In this manner, the laminate may serve as a reclosure layer, e.g. a lid film, and since the adhesive is intact and protected, this reclosure will operate for the entire service life of the package.

## Claims

1. A method of making a reclosable laminate, such as a lid film for packages, said laminate comprising a base layer (3), an adhesive layer (2) and a welding layer (1), **characterized in that** the adhesive layer (2) of hot melt is applied on to the base layer (3) during feeding (10) of the base layer (3), and that the welding layer (1), which comprises a layer of polyethylene co-polymer serving as an adhesion surface towards the adhesive layer (2), is extruded on the adhesive layer (2), wherein the welding layer (1) is extruded onto the adhesive layer (2) in a thickness of 8-20 µm or corresponding to approximately 10-20 g/m², and wherein the manufacture of the laminate takes place in one run.

2. A method according to claim 1, **characterized by** applying the adhesive layer (2) via a roller (11) to the base layer (3).

3. A method according to claim 1, **characterized by** applying the adhesive layer (2) via an applicator nozzle (6) to the base layer (3).

4. A method according to any one of claims 1-3, **characterized by** the welding layer (1) comprising two sub layers, which are coextruded on to the adhesive layer (2).

5. A method according to any one of claims 14, **characterized in that** the application of the hot melt (2) and the welding layer (1) takes place in one working operation during the feeding (10) of the base layer (3).

6. A method according to any of the claims 1-5, **characterized in that** the adhesive layer (2) is applied to the base layer (3) in a thickness of 6-35 µm and preferably a thickness of 15-23 µm corresponding to approximately 12-18 g/m².

7. A method according to any one of the preceding claims, wherein the welding layer (1) of the laminate (9) is welded firmly onto a lower web (5), such as the rim area (5) of a container or another sheet in a package, the package is opened, and the laminate (9) is torn when opening the package, whereby the welding layer (1) is broken, thereby exposing the adhesive layer (2), which remains either on the part of the welding layer (1) which remains on the lower web (5) when the package is opened, or remains on the base layer (3), following which the laminate (9) may be put together in order to close the package.

## Patentansprüche

1. Verfahren zum Herstellen eines wiederverschließbaren Laminats, wie beispielsweise einer Deckelfolie für Verpackungen, das Laminat umfassend eine Basisschicht (3), eine Klebstoffschicht (2) und eine Schweißschicht (1), **dadurch gekennzeichnet, dass** die Klebstoffschicht (2) aus Heißschmelzmasse auf der Basisschicht (3) beim Zuführen (10) der Basisschicht (3) aufgebracht wird und dass die Schweißschicht (1), die eine Schicht aus Polyethylen-Copolymer umfasst, das als eine Haftoberfläche gegenüber der Klebstoffschicht (2) dient, auf der Klebstoffschicht (2) extrudiert wird, wobei die Schweißschicht (1) in einer Dicke von 8 bis 20 µm, oder entsprechend ungefähr 10 bis 20 g/m², auf der Klebstoffschicht (2) extrudiert wird und wobei die Herstellung des Laminats in einem Arbeitsgang erfolgt.

2. Verfahren nach Anspruch 1, **gekennzeichnet durch** Aufbringen der Klebstoffschicht (2) auf der Basisschicht (3) über eine Walze (11).

3. Verfahren nach Anspruch 1, **gekennzeichnet durch** Aufbringen der Klebstoffschicht (2) auf der Basisschicht (3) über eine Applikatordüse (6).

4. Verfahren nach einem der Ansprüche 1 bis 3, **gekennzeichnet dadurch, dass** die Schweißschicht (1) zwei Subschichten umfasst, die auf der Klebstoffschicht (2) koextrudiert werden.

5. Verfahren nach einem der Ansprüche 1 bis 4, **dadurch gekennzeichnet, dass** die Aufbringung der Heißschmelzmasse (2) und der Schweißschicht (1) in einer Arbeitsoperation beim Zuführen (10) der Basisschicht (3) erfolgt.

6. Verfahren nach einem der Ansprüche 1 bis 5, **dadurch gekennzeichnet, dass** die Klebstoffschicht (2) auf der Basisschicht (3) in einer Dicke von 6 bis 35 µm und vorzugsweise in einer Dicke von 15 bis 23 µm, entsprechend ungefähr 12 bis 18 g/m², aufgebracht wird.

7. Verfahren nach einem der vorhergehenden Ansprüche, wobei die Schweißschicht (1) des Laminats (9) fest auf ein unteres Gewebe (5), wie beispielsweise den Randbereich (5) eines Behälters oder eine andere Folie in einer Packung, geschweißt wird, die Packung geöffnet wird und das Laminat (9) beim Öffnen der Packung eingerissen wird, wodurch die Schweißschicht (1) aufgetrennt wird, wobei dadurch die Klebstoffschicht (2) freigelegt wird, die entweder auf dem Teil der Schweißschicht (1) verbleibt, die auf dem unteren Gewebe (5) verbleibt, wenn die Packung geöffnet wird, oder auf der Basisschicht (3) verbleibt, worauf folgend das Laminat (9) zusammengesetzt werden kann, um die Packung zu verschließen.

## Revendications

1. Procédé de fabrication d'un stratifié refermable, tel qu'un film de couvercle pour des emballages, ledit stratifié comprenant une couche de base (3), une couche adhésive (2) et une couche de soudure (1), **caractérisé en ce que** la couche adhésive (2) de masse fondue chaude est appliquée sur la couche de base (3) pendant l'alimentation (10) de la couche de base (3), et **en ce que** la couche de soudure (1), qui comprend une couche de copolymère de polyéthylène servant de surface d'adhésion vers la couche adhésive (2), est extrudée sur la couche adhésive (2), la couche de soudure (1) étant extrudée sur la couche adhésive (2) en une épaisseur de 8 à 20 µm ou correspondant à approximativement 10 à 20 g/m², et la fabrication du stratifié ayant lieu en une exécution.

2. Procédé selon la revendication 1, **caractérisé par** l'application de la couche adhésive (2) par l'intermédiaire d'un rouleau (11) sur la couche de base (3) .

3. Procédé selon la revendication 1, **caractérisé par** l'application de la couche adhésive (2) par l'intermédiaire d'une buse d'applicateur (6) sur la couche de base (3).

4. Procédé selon l'une quelconque des revendications 1 à 3, **caractérisé en ce que** la couche de soudure (1) comprend deux sous-couches, qui sont coextrudées sur la couche adhésive (2).

5. Procédé selon l'une quelconque des revendications 1 à 4, **caractérisé en ce que** l'application de la masse fondue chaude (2) et de la couche de soudure (1) a lieu en une opération de travail pendant l'alimentation (10) de la couche de base (3).

6. Procédé selon l'une quelconque des revendications 1 à 5, **caractérisé en ce que** la couche adhésive (2) est appliquée sur la couche de base (3) en une épaisseur de 6 à 35 µm et de préférence en une épaisseur de 15 à 23 µm correspondant à approximativement 12 à 18 g/m².

7. Procédé selon l'une quelconque des revendications précédentes, dans lequel la couche de soudure (1) du stratifié (9) est soudée fermement sur une bande inférieure (5), telle que la zone de bord (5) d'un contenant ou une autre feuille dans un emballage, l'emballage est ouvert, et le stratifié (9) est déchiré lors de l'ouverture de l'emballage, ce qui rompt la couche de soudure (1), exposant ainsi la couche adhésive (2), qui reste soit sur la partie de la couche de soudure (1) qui reste sur la bande inférieure (5) lorsque l'emballage est ouvert, soit reste sur la couche de base (3), après quoi le stratifié (9) peut être réassemblé afin de fermer l'emballage.
